# EUROPEAN PATENT APPLICATION

(11) **EP 4 737 944 A1**
(43) Date of publication of application: **06.05.2026**
(21) Application number: 24831685.3
(22) Date of filing: 13.06.2024
(51) Int. Cl.: G01S 7/481, G01C 3/06, G01S 17/931, G02B 26/10, H02K 33/00

(54) **RANGING DEVICE**

(30) Priority: 30.06.2023 JP 2023107966
(71) Applicant: DENSO CORPORATION, Kariya-city, Aichi 448-8661 (JP)
(72) Inventor: IMAI, Tsuyoshi, Kariya-city, Aichi 448-8661 (JP); OKADA, Keita, Kariya-city, Aichi 448-8661 (JP); TOMITA, Shodai, Kariya-city, Aichi 448-8661 (JP)
(74) Representative: Kuhnen & Wacker Patent- und Rechtsanwaltsbüro PartG mbB
(86) International application number: PCT/JP2024/021455
(87) International publication number: WO 2025/004820

(57) **Abstract**

A ranging device (1) is configured to measure a distance to an object by scanning an outside with light and detecting the light reflected by the object. The ranging device includes a mirror (18), an oscillating shaft (13), and an actuator (20). The mirror is configured to oscillate to scan the outside with the light. The mirror is fixed to the oscillating shaft. The actuator includes a rotor magnet (22) and a rotor fixing portion (31, 37, 41, 46, 48). The rotor magnet has a tubular shape and the oscillating shaft is inserted through the rotor magnet. The rotor fixing portion fixes the rotor magnet to the oscillating shaft. The actuator is configured to drive the oscillating shaft to oscillate by being energized. The rotor fixing portion restricts the rotor magnet from moving in an axial direction, a radial direction, and a rotational direction of the oscillating shaft.

## Description

### CROSS REFERENCE TO RELATED APPLICATION

This application is based on Japanese Patent Application No. 2023-107966, filed on June 30, 2023. The entire disclosure of which is incorporated herein by reference.

### TECHNICAL FIELD

The present disclosure relates to a ranging device.

### BACKGROUND ART

Ranging devices are known that detect the distance to an object by emitting a transmission wave and detecting a reflected wave of the transmission wave from the object. For example, a rotary reciprocating drive actuator disclosed in Patent Document 1 is used in a LiDAR (Light Detection and Ranging) device and is reciprocated by magnetic flux generated by a magnet fixed to a rotary shaft.

### PRIOR ART LITERATURE

### PATENT LITERATURE

Patent Document 1: JP 2023-043027 A

### SUMMARY OF INVENTION

In patent document 1, movement of the rotary shaft and the magnet in a thrust direction is restricted by a spacer and a preload spring. However, movement in a rotational direction or a radial direction is not restricted. An object of the present disclosure is to provide a ranging device capable of restricting a movement of a rotor magnet.

The ranging device of the present disclosure is a device configured to measure a distance to an object by scanning an outside with light and detecting the light reflected by the object. The ranging device includes a mirror, an oscillating shaft, and an actuator. The mirror is configured to oscillate to scan the outside with the light. The mirror is fixed to the oscillating shaft. The actuator includes a rotor magnet and a rotor fixing portion. The rotor magnet has a tubular shape and the oscillating shaft is inserted through the rotor magnet. The rotor fixing portion fixes the rotor magnet to the oscillating shaft. The actuator is configured to drive the oscillating shaft to oscillate by being energized. The rotor fixing portion restricts the rotor magnet from moving in an axial direction, a radial direction, and a rotational direction of the oscillating shaft. As a result, the movement of the rotor magnet can be properly restricted.

### BRIEF DESCRIPTION OF DRAWINGS

The above and other objectives, features and advantages of the present disclosure will become more apparent from the following detailed description with reference to the accompanying drawings. In the drawings,
FIG. 1 is a schematic diagram showing a ranging device according to a first embodiment,
FIG. 2 is a cross-sectional view showing an oscillating actuator of the ranging device according to the first embodiment,
FIG. 3 is a cross-sectional view showing a rotor fixing portion according to the first embodiment,
FIG. 4 is a cross-sectional view showing the rotor fixing portion according to a second embodiment,
FIG. 5 is a cross-sectional view showing the rotor fixing portion according to a third embodiment,
FIG. 6 is a cross-sectional view taken along a line VI-VI of FIG. 5,
FIG. 7 is a view in a VII direction of FIG. 6,
FIG. 8 is a cross-sectional view showing the rotor fixing portion according to a fourth embodiment,
FIG. 9 is a cross-sectional view showing a protruding portion and a groove according to a fifth embodiment, and
FIG. 10 is a cross-sectional view showing the rotor fixing portion according to a sixth embodiment.

### EMBODIMENTS FOR CARRYING OUT THE INVENTION

Hereinafter, a ranging device of the present disclosure will be described with reference to the drawings. Hereinafter, in a plurality of embodiments, substantially the same components are denoted by the same reference signs, and the description thereof is omitted.

### (First Embodiment)

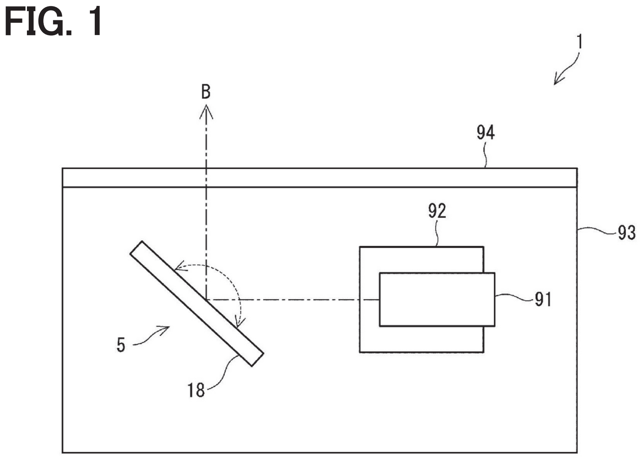

The first embodiment is shown in FIGS. 1 to 3. As shown in FIG. 1, a ranging device 1 is a LiDAR (Light Detection and Ranging) device configured to measure a distance to an object by emitting light and detecting the light reflected from the object that is irradiated with the light. The ranging device 1 may be mounted on a vehicle and is used to detect objects that present in front of the vehicle.

The ranging device 1 includes a light emitting unit 91, a light receiving unit 92, and an oscillating actuator 5, all of which are accommodated in a housing 93. The light emitting unit 91 intermittently emits a light beam B. The emitted light beam B is reflected by a mirror 18 that is oscillated, and is emitted to the outside through an optical window 94. The light receiving unit 92 receives the light reflected from an object irradiated with the light beam B. The light detected by the light receiving unit 92 is converted into an electrical signal, which is used for calculating the distance to the object.

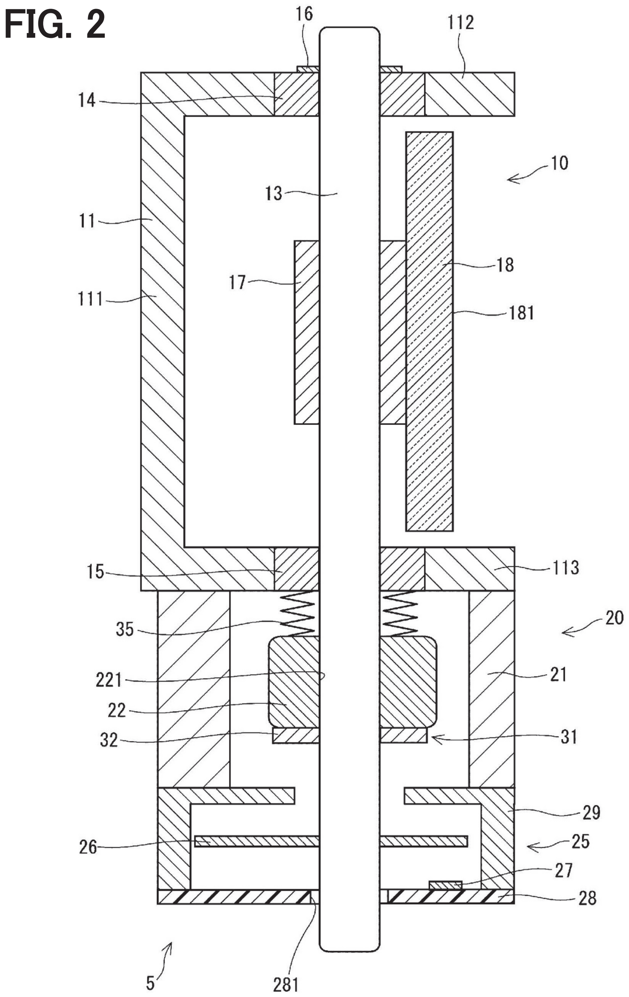

As shown in FIG. 2, the oscillating actuator 5 includes a mirror unit 10, an oscillating motor 20, and an encoder 25. The mirror unit 10 includes a base 11, a spindle 13, a holder 17, and a mirror 18. The base 11 includes a mounting portion 111 and retaining walls 112 and 113. The mounting portion 111 and the retaining walls 112 and 113 are integrally formed with each other from metal or the like. The mounting portion 111 is attached to a housing (not illustrated) using bolts or other components. The retaining walls 112 and 113 extend approximately perpendicular to the mounting portion 111 from both ends of the mounting portion 111.

The spindle 13 is arranged approximately parallel to the mounting portion 111 and is supported on the base 11 by bearings 14 and 15 provided in the retaining walls 112 and 113 so that the spindle 13 is rotatable. The bearings 14 and 15 in the present embodiment are ball bearings, but bearings other than ball bearings may also be used. In an outside of the base 11 from the bearing 15, the spindle 13 extends to the oscillating motor 20 and the encoder 25. Hereinafter, an oscillation axis direction of the spindle 13 will be simply referred to as an "axial direction" as appropriate.

An E-ring 16 is provided on an outer side of the bearing 14 in the axial direction and functions as a stopper to prevent the spindle 13 from coming out. A preload spring 35 is provided between the rotor magnet 22 and the bearing 15, and biases the spindle 13 toward the encoder 25 (downward in FIG. 2).

The holder 17 is press-fitted and fixed to the spindle 13. The mirror 18 is formed in a flat plate shape and is attached to the holder 17 to be symmetrical with respect to an oscillation axis. The holder 17 and the mirror 18 are formed symmetrically with respect to the oscillation axis, so that a moment of inertia during oscillating can be made equal in both directions.

The holder 17 and the mirror 18 are disposed inside the base 11 so that a mirror surface 181 faces away from the mounting portion 111, and are driven to oscillate by the oscillating motor 20. The mirror 18 reflects the light beam B output from the light emitting unit 91 using the mirror surface 181, and emits the light beam B to the outside in a direction corresponding to an oscillating position of the mirror 18, thereby scanning a predetermined scanning range with the light beam B.

The oscillating motor 20 is disposed on one side of the mirror unit 10 in the axial direction. The oscillating motor 20 includes a stator 21, a rotor magnet 22, and a rotor fixing portion 31. The stator 21 is fixed to the retaining wall 113 with bolts or other members. The stator 21 is provided with an electromagnetic coil and a fixed magnet (not illustrated).

The rotor magnet 22 is a cylindrical two-pole magnet, and defines a shaft hole 221 through which the spindle 13 is inserted. The rotor magnet 22 is fixed to the spindle 13 with the rotor fixing portion 31. Details of the rotor fixing portion 31 will be described later. In addition, in order to simplify explanation of a rotor fixing structure and the like, one side of the rotor magnet 22 in the axial direction that faces away from the mirror unit 10 is referred to as a "lower side", and the other side of the rotor magnet 22 in the axial direction that faces the mirror unit 10 is referred to as an "upper side".

The rotor magnet 22 is an inner rotor, which is disposed inside the stator 21, and oscillates about a stationary position of the rotor magnet 22 when electric current is supplied to the electromagnetic coil. Here, the term "oscillation" refers to a movement in which forward and reverse rotation are periodically repeated within a predetermined angular range of less than 360°. When the supply of electric current to the electromagnetic coil is turned off, the rotor magnet 22 returns to and remains at the stationary position due to a magnetic force of the fixed magnet. A size of the rotor magnet 22 can be arbitrarily designed according to mounting constraints, the required magnetic force, and other factors.

The encoder 25 includes a disk 26 and a detecting element 27, and is accommodated in a case 29. The disk 26 is attached to a disk hub (not illustrated) that is press-fitted and fixed to the spindle 13, and rotates integrally with the spindle 13. The detecting element 27 is mounted on a substrate 28 and detects a rotational position of the disk 26. As a result, the encoder 25 is capable of detecting the oscillating position of the oscillating motor 20 and the mirror 18. The substrate 28 defines a through-hole 281 through which the spindle 13 is inserted.

The rotor magnet 22 cannot be directly fixed to the spindle 13 by press-fitting or other methods due to strength limitations. When positioning of the rotor magnet 22 in the axial direction is performed by a spacer and the preload spring 35 between two bearings that support an oscillating axis, the spacer and the preload spring 35 may extend in the axial direction under high-temperature environments. As a result, excessive load may be applied to the rotor magnet 22, thereby causing the rotor magnet 22 to crack. In addition, the bearing 15 may be broken due to the excessive load from the preload spring 35.

Furthermore, the spacer and the preload spring 35 contract in the axial direction under low-temperature environments, which may cause the rotor magnet 22 to become loose. In addition, decrease in the load from the preload spring 35 and increase in the internal looseness of the bearing 15 may cause greater tilting of the spindle 13 and result in decreased distance measurement accuracy.

Furthermore, even when axial positioning of the rotor magnet 22 is performed by sandwiching the rotor magnet 22 between the preload spring 35 and the spacer, there is no restriction in the rotational or radial directions. As a result, the rotor magnet 22 may move in the radial direction and collide with other members, or may idle relative to the spindle 13.

Therefore, in the present embodiment, the movement of the rotor magnet 22 is restricted so that displacement of the rotor magnet 22 relative to the spindle 13 does not occur in the axial, radial, and rotational directions. In addition, considering axial displacement and load variation due to thermal expansion, the rotor magnet 22 is fixed to the spindle 13 by the rotor fixing portion 31.

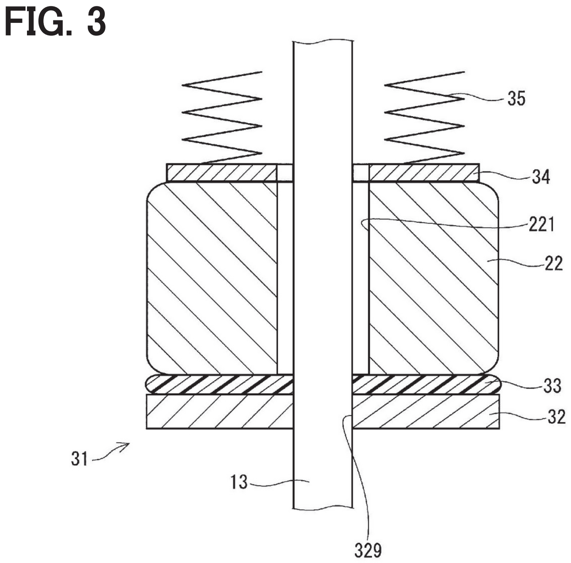

As shown in FIG. 3, the rotor fixing portion 31 includes a hub 32, a washer 34, and the preload spring 35. For example, the hub 32 is formed from metal into a substantially disc shape with approximately the same diameter as the rotor magnet 22, and defines a press-fit hole 329. The spindle 13 is press-fitted and fixed into the press-fit hole 329.

A lower end of the rotor magnet 22 in the axial direction is fixed to the hub 32 with an adhesive 33. Since the one side of the rotor magnet 22 in the axial direction is fixed flat to the hub 32, movement of the rotor magnet 22 in the radial and rotational directions due to vibration or the like is restricted.

The washer 34 is provided on an upper surface of the rotor magnet 22. The preload spring 35 has one end in contact with the washer 34 and the other end in contact with the bearing 15. As a result, a position of the rotor magnet 22 in the axial direction is defined. The washer 34 can support the one end of the preload spring 35 properly and keep the one end flat.

In the present embodiment, one side of the rotor magnet 22 in the axial direction is fixed to the hub 32 with the adhesive 33, and the other side of the rotor magnet 22 is elastically supported by the preload spring 35, on an outside of the two bearings 14 and 15. As a result, even when the rotor magnet 22 undergoes thermal expansion due to temperature changes, breakage of the rotor magnet 22 can be prevented.

As described above, the ranging device 1 measures a distance to an object by scanning the outside with light and detecting the light reflected from the object, and includes the mirror 18, the spindle 13, and the oscillating motor 20. The mirror 18 oscillates to scan the outside with the light. The mirror 18 is fixed to the spindle 13. The oscillating motor 20 includes the tubular rotor magnet 22 through which the spindle 13 is inserted, and the rotor fixing portion 31 that fixes the rotor magnet 22 to the spindle 13. The oscillating motor 20 drives the spindle 13 to oscillate by being energized.

The rotor fixing portion 31 restricts the rotor magnet 22 from moving in the axial direction, the radial direction, and the rotational direction of the spindle 13. As a result, fluctuations in motor performance can be minimized. In addition, since collisions with other components due to the movement of the rotor magnet 22 can be avoided, durability can be improved.

The rotor fixing portion 31 includes the hub 32 that is fixed to the spindle 13. An end surface of the rotor magnet 22 facing the one side in the axial direction is fixed to the hub 32 with the adhesive 33. As a result, the rotor magnet can be prevented from moving in the radial direction and from idling relative to the spindle. Furthermore, the rotor magnet 22 can be relatively easily assembled by adhering the rotor magnet 22 flat to the hub 32.

The rotor fixing portion 31 includes the preload spring 35 that is disposed on a side of the rotor magnet 22 opposite to the hub 32. The position of the rotor magnet 22 in the axial direction can be restricted by the preload spring 35 pressing the rotor magnet 22 toward the hub 32. Furthermore, stress caused by vibration and heat can be absorbed by the preload spring 35 supporting the rotor magnet 22 in the axial direction outside of the bearings 14 and 15.

### (Second Embodiment)

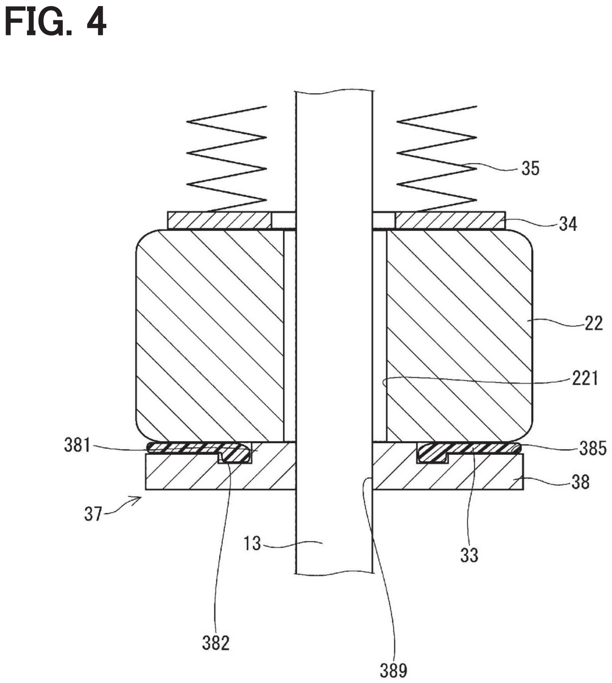

Since second to sixth embodiments are different from the above embodiment mainly in a rotor fixing structure, this point will be mainly described. As illustrated in FIG. 4, a rotor fixing portion 37 has a hub 38 of which shape is different from the hub 32 according to the first embodiment.

For example, the hub 38 is formed from metal into a substantially disk shape with approximately the same diameter as the rotor magnet 22, and defines a press-fit hole 389. The spindle 13 is press-fitted and fixed into the press-fit hole 389. The hub 38 has an adhesive surface 385 facing the rotor magnet 22. The adhesive surface 385 includes a magnet contact portion 381 and a groove 382.

The magnet contact portion 381 protrudes from the adhesive surface 385 toward the rotor magnet 22, and a tip surface of the magnet contact portion 381 is in contact with the rotor magnet 22 without the adhesive 33. In the present embodiment, the magnet contact portion 381 is formed in an annular shape along an outer edge of the press-fit hole 389. In the present embodiment, the rotor magnet 22 adheres to the hub 38 at a position radially outward of the magnet contact portion 381. The groove 382 is formed in an annular shape along the outer edge of the magnet contact portion 381.

A uniform thickness of the adhesive 33 can be achieved by disposing the protruding magnet contact portion 381 on the adhesive surface 385 of the hub 38, and bringing the hub 38 and the rotor magnet 22 in contact at the magnet contact portion 381. As a result, an adhesive strength can be ensured.

Furthermore, when the adhesive 33 overflows onto the magnet contact portion 381, the thickness of the adhesive 33 may become non-uniform, thereby reducing the adhesive strength. Thus, the groove 382 is disposed to accumulate the adhesive 33 in the present embodiment. As a result, the adhesive 33 is less likely to overflow onto the magnet contact portion 381, thereby reducing fluctuations in an amount of the applied adhesive 33.

The magnet contact portion 381 disposed at a radially inner portion of the hub 38 along the press-fit hole 389 ensures a press-fit length and allows an adhesive condition to be confirmed from an outside of the hub 38. Furthermore, the overflow of the adhesive 33 onto the magnet contact portion 381 can be effectively prevented by forming the groove 382 along the magnet contact portion 381.

In the present embodiment, the adhesive surface 385 of the hub 38 facing the rotor magnet 22 includes the magnet contact portion 381 that protrudes from the adhesive surface 385 and is contact with the rotor magnet 22 without the adhesive 33. As a result, the thickness of the adhesive 33 can be made uniform.

The groove 382 is defined on the adhesive surface 385. As a result, the overflow of the adhesive 33 onto the magnet contact portion 381 can be prevented by allowing the adhesive 33 to escape into the groove 382. In addition, the same effects as those of the above embodiment are exerted.

### (Third Embodiment)

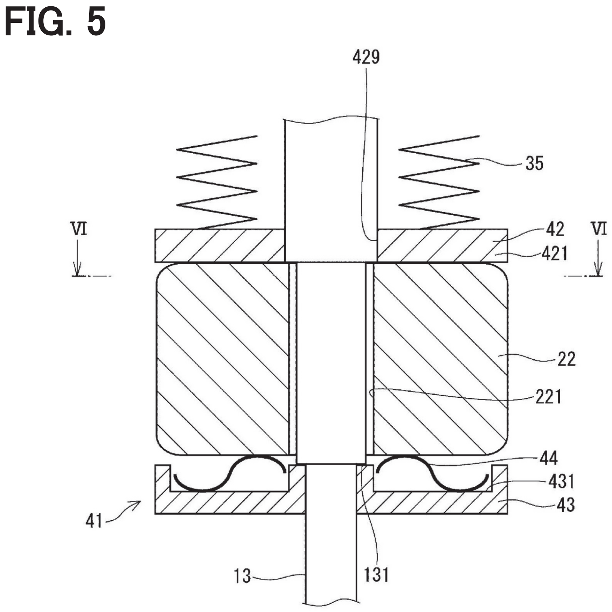

As illustrated in FIGS. 5 to 7, a rotor fixing portion 41 according to the third embodiment includes a hub 42, a spring fixing member 43, a wave washer 44, and the preload spring 35.

The hub 42 is disposed on the upper side of the rotor magnet 22 and is press-fitted and fixed to the spindle 13. The hub 42 includes a base portion 421 and protruding portions 422 that are integrally formed of metal or the like. The base portion 421 is formed in a substantially disk shape, and defines a press-fit hole 429 passing through the base portion 421 in the thickness direction. The spindle 13 is press-fitted into the press-fit hole 429. One end of the preload spring 35 is in contact with a surface of the base portion 421 facing away from the rotor magnet 22. In the present embodiment, since the preload spring 35 is received on the flat surface of the hub 42 that faces away from the rotor magnet 22, a washer can be omitted.

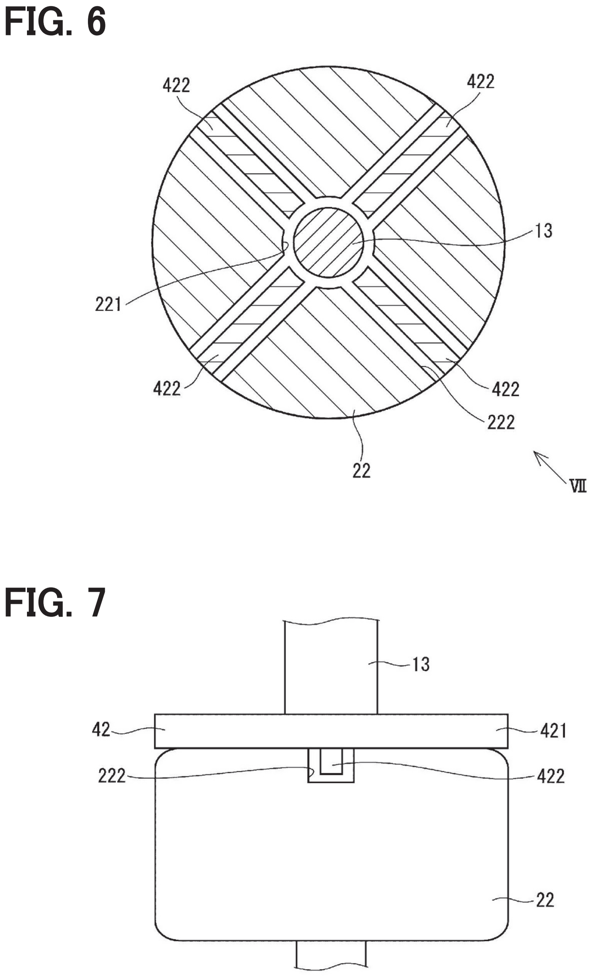

As illustrated in FIGS. 6 and 7, the protruding portions 422 protrude from a surface of the base portion 421 that faces the rotor magnet 22. In the present embodiment, the four protruding portions 422 are formed along the radial direction at positions outside the press-fit hole 429, and are arranged in a cross shape as a whole in a planar view. The protruding portions 422 are inserted into grooves 222 formed on the upper surface of the rotor magnet 22. The grooves 222 extend to an outer peripheral wall of the rotor magnet 22 and are open to the outside of the rotor magnet 22 in the radial direction. Outer surfaces of the protruding portions 422 in the radial direction are exposed from the rotor magnet 22.

The insertion of the protruding portions 422 formed in a cross-shape into the groove 222 of the rotor magnet 22 restricts movement of the rotor magnet 22 in the radial direction and the protruding portions 422 serve as a rotation stopper for the rotor magnet 22 relative to the spindle 13. The shape and number of the protruding portions 422 are not limited as long as the movement of the rotor magnet 22 in the radial and circumferential directions can be restricted. That is, the four protruding portions 422 do not necessarily have to be perpendicular to each other, or arranged in a cross-shape.

As illustrated in FIG. 5, the spring fixing member 43 is formed in a substantially disk shape from metal or the like, and is press-fitted and fixed to the spindle 13 below the rotor magnet 22. The spindle 13 includes a stepped portion 131 that is formed so that a portion of the spindle 13 below the rotor magnet 22 has a smaller diameter than that of a portion of the spindle in the rotor magnet 22. The spring fixing member 43 is inserted from below the rotor magnet 22 and press-fitted and fixed to the small-diameter portion of the spindle 13 while being in contact with the stepped portion 131. As a result, a position of the spring fixing member 43 in the axial direction is determined.

The spring fixing member 43 defines a recess 431 on a surface facing the rotor magnet 22. The wave washer 44 is provided in the recess 431. The wave washer 44 is in contact with both the rotor magnet 22 and the spring fixing member 43 in the axial direction. As a result, a position of the rotor magnet 22 in the axial direction is fixed.

When the rotor magnet 22 is fixed by clamping the rotor magnet 22 between two hubs without the wave washer 44, the rotor magnet 22 may be broken due to thermal expansion caused by temperature changes or the like. In the present embodiment, the breakage of the rotor magnet 22 can be prevented by maintaining the position of the rotor magnet 22 in the axial direction via the wave washer 44, which has elasticity in the axial direction. Materials other than the wave washer 44, such as rubber or other elastic members, may be used as long as elastic deformation in the axial direction is possible.

In the present embodiment, the rotor fixing portion 41 has the hub 42 having the base portion 421 fixed to the spindle 13, and the protruding portions 422 protruding from the base portion 421 are fitted into the grooves 222 disposed on the end surface of the rotor magnet 22 facing the other side in the axial direction. The protruding portions 422 and the grooves 222 are formed along straight lines extending in the radial direction on an outer side of the spindle 13 in the radial direction.

As a result, the rotor magnet can be prevented from moving in the radial direction and from idling relative to the spindle. Furthermore, the position of the rotor magnet 22 is restricted without an adhesive in the present embodiment. Thus, peeling of the adhesive due to deterioration can be avoided, and stable fixation of the rotor magnet 22 can be maintained.

The rotor fixing portion 41 includes the wave washer 44 disposed on the side of the rotor magnet 22 opposite to the hub 42. In the present embodiment, the wave washer 44 corresponds to an "elastic member." Specifically, the spring fixing member 43, which serves as a receiving member for the wave washer 44, is fixed to the spindle 13 on the side of the rotor magnet 22 opposite to the hub 42, and the wave washer 44 is clamped between the rotor magnet 22 and the spring fixing member 43. The position of the rotor magnet 22 in the axial position can be restricted by the wave washer 44 pressing the rotor magnet 22 toward the hub 42. In addition, stress caused by vibration and heat can be absorbed. In addition, the same effects as those of the above embodiments are exerted.

### (Fourth Embodiment)

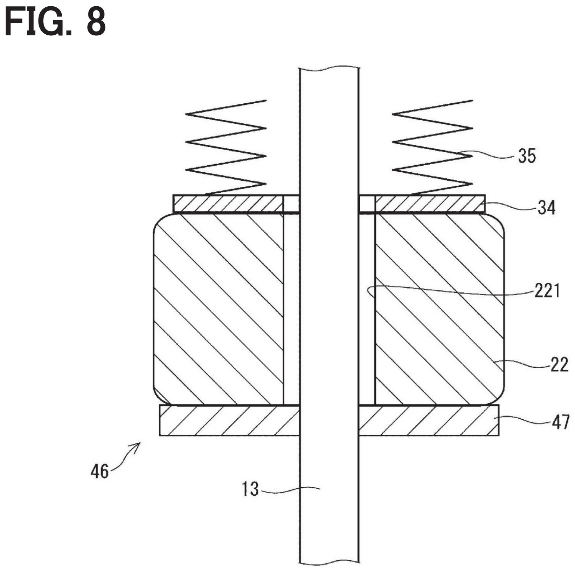

The fourth embodiment is shown in FIG. 8. A rotor fixing portion 46 according to the fourth embodiment includes a hub 47, the washer 34, and the preload spring 35. The shape and other aspects of the hub 47 according to the present embodiment are the same as those of the hub 42 according to the second embodiment, and the hub 47 is disposed below the rotor magnet 22. The hub 47 includes protruding portions fitting into grooves formed on a lower surface of the rotor magnet 22. A fixing structure upward of the rotor magnet 22 is the same as that according to the first embodiment. Even with this configuration, the same effects as those of the above embodiments can be achieved.

### (Fifth Embodiment, Sixth Embodiment)

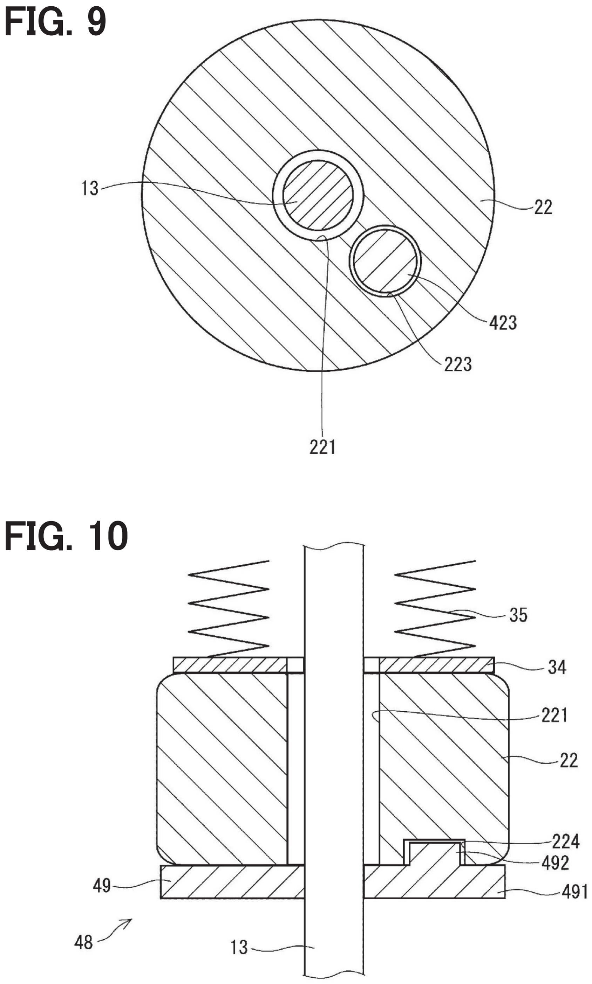

The fifth embodiment is illustrated in FIG. 9, and the sixth embodiment is illustrated in FIG. 10. FIG. 9 is a cross-sectional view corresponding to FIG. 6. In the fifth embodiment, a protruding portion 423 is formed in a cylindrical shape and is inserted into a groove 223 that is defined in a shape corresponding to the upper surface of the rotor magnet 22.

In addition, a rotor fixing portion 48 according to the sixth embodiment illustrated in FIG. 10 includes a hub 49 below the rotor magnet 22. The hub 49 includes a cylindrical protruding portion 492 that protrudes from a base portion 491, and the protruding portion 492 fits into a groove 224 defined on the lower surface of the rotor magnet 22. The shapes of the protruding portions 423 and 492 are not limited to cylindrical shapes and may instead be polygonal prism shapes or any other suitable shapes.

In the fifth and sixth embodiments, the protruding portions 423 and 492 are formed in a columnar shape. When the columnar protruding portions 423 and 492 are inserted into the grooves 223 and 224 of the rotor magnet 22, the protruding portions 423 and 492 are surrounded by the rotor magnet 22 on their entire circumference. Even with this configuration, the same effects as those of the above embodiments can be achieved.

In the embodiments, the spindle 13 corresponds to an "oscillating shaft," the oscillating motor 20 to an "actuator," each of the hubs 32, 38, 42, 47, and 49 to a "retaining plate," the adhesive 33 to an "interposed member," each of the preload spring 35 and wave washer 44 to an "elastic member," and each of the grooves 222 to 224 to a "fitting groove."

### (Other Embodiments)

In the first and second embodiments, the hubs 32 and 38 are arranged on the lower side of the rotor magnet 22. In other embodiments, the hub may be disposed on the upper side of the rotor magnet, and the upper surface of the rotor magnet may be fixed with an adhesive.

In the second embodiment, the magnet contact portion is formed along the shaft hole, and a groove is formed outside the magnet contact portion. In other embodiments, either the magnet contact portion or the groove may be omitted. In addition, the magnet contact portion and the groove may be arranged on the adhesive surface at different locations or in different shapes, from the second embodiment.

In the third to sixth embodiments, the protruding portion(s) of the retaining plate is fitted into the groove(s) of the rotor magnet. In other embodiment, an adhesive, rubber, or other material may be disposed as a cushion material to fill gaps between the protruding portion(s) and the groove(s). Since the cushion absorbs collisions between components caused by vibration and the like, durability is improved. In other embodiments, a structure and arrangement of the actuator and mirror unit may be different from those in the above-described embodiments, as long as the mirror can be oscillated.

The present disclosure is not limited to the above-described embodiments, and various modifications may be made within the scope of the present disclosure.

The present disclosure has been made in accordance with the embodiments. However, the present disclosure is not limited to such embodiments and configurations. The present disclosure also includes various modification examples and modifications within the scope of equivalents. Furthermore, various combination and formation, and other combination and formation including one, more than one or less than one element may be made in the present disclosure.

## Claims

1. A ranging device configured to measure a distance to an object by scanning an outside with light and detecting the light reflected from the object, the ranging device comprising:
a mirror (18) configured to oscillate to scan the outside with the light;
an oscillating shaft (13) to which the mirror is fixed; and
an actuator (20) configured to drive the oscillating shaft to oscillate by being energized, wherein
the actuator includes:
a rotor magnet (22) having a tubular shape, the rotor magnet through which the oscillating shaft is inserted; and
a rotor fixing portion (31, 37, 41, 46, 48) fixing the rotor magnet to the oscillating shaft, and
the rotor fixing portion restricts the rotor magnet from moving in an axial direction, a radial direction, and a rotational direction of the oscillating shaft.

2. The ranging device according to claim 1, wherein
the rotor fixing portion includes a retaining plate (32, 38) fixed to the oscillating shaft,
the rotor magnet has an end surface in the axial direction, and
the end surface of the rotor magnet is fixed to the retaining plate by an interposed member (33).

3. The ranging device according to claim 2, wherein
the retaining plate has an adhesive surface (385) that faces the rotor magnet, and a magnet contact portion (381) that protrudes from the adhesive surface, and
the magnet contact portion is in contact with the rotor magnet without the interposed member.

4. The ranging device according to claim 3, wherein
the adhesive surface defines a groove (382).

5. The ranging device according to claim 1, wherein
the rotor magnet has an end surface in the axial direction which defines a fitting groove (222, 223, 224),
the rotor fixing portion (41, 46, 48) includes a retaining plate (42, 47, 49) having:
a base portion (421) fixed to the oscillating shaft; and
a protruding portion (422, 423, 492) protruding from the base portion, and
the protruding portion of the retaining plate is fitted into the fitting groove of the rotor magnet.

6. The ranging device according to claim 5, wherein
the protruding portion is one of a plurality of protruding portions (422) and the fitting groove is one of a plurality of fitting grooves (222), and
each of the plurality of protruding portions and each of the plurality of fitting grooves extends linearly and radially outward of the oscillating shaft.

7. The ranging device according to claim 5, wherein
the protruding portion (423, 492) is formed in a columnar shape.

8. The ranging device according to any one of claims 2 to 7, wherein
the rotor fixing portion includes an elastic member (35, 44), and
the rotor magnet is disposed between the retaining plate and the elastic member.
